# NOUVEAU FASCICULE DE BREVET EUROPEEN

(11) **EP 0 535 753 B2**
(45) Date de publication et mention de la décision concernant l'opposition: **30.06.1999**
(45) Mention de la délivrance du brevet: 28.06.1995
(21) Numéro de dépôt: 92203010.1
(22) Date de dépôt: 30.09.1992
(51) Int. Cl.: G01J 1/00, G01J 3/12, G01J 3/18

(54) **Dispositif de spectrométric à filtrage de bande spectrale**
Vorrichtung zur Spektralphotometrie mit Spektralbandfilterung
Device for spectrometry with spectral band filtering

(30) Priorité: 01.10.1991 FR 9112061
(43) Date de publication de la demande: 07.04.1993
(73) Titulaire: DILOR, F-59000 Lille (FR)
(72) Inventeur: Delhaye, Michel, F-59943 Villeneuve d'Ascq (FR); Da Silva, Edouard, F-59000 Lille (FR); Martinez, Gérard, F-38600 Fontaine (FR)
(74) Mandataire: Michelet, Alain

(56) Documents cités:
- EP-A- 0 184 428
- US-A- 3 554 647
- US-A- 3 865 490
- US-A- 3 907 430
- US-A- 3 914 055
- US-A- 4 025 196
- US-A- 4 235 518
- APPLIED OPTICS, vol. 16, no. 4, 1 Avril 1977, pages 1085-1087, J. FELLMAN ET AL.: "Premonochromator for stray light rejection in Raman spectroscopy"
- JOURNAL OF OPTICS, vol. 11, no. 4, 1 Août 1980, pages 257-267, C. JULIEN: "Un triple monochromateur pour la spectroscopie Raman à basses fréquences"
- "Confocal microscopy", T. Wilson, Academic Press, 1990, pages 1-11, 41, 93-99, 108-118, 135-139, 185-189, 229-231, 345-346

## Description

L'invention se rapporte à la spectrométrie à filtrage de bande spectrale.

Elle trouve une application dans l'analyse spectrochimique par émission, luminescence, phosphorescence, fluorescence, effet Raman, etc.

On connaît déjà des dispositifs de spectrométrie à filtrage de bande spectrale (FR-A-2 553 410).

Généralement, de tels dispositifs comprennent:
- des moyens générateurs propres à générer un rayonnement électromagnétique excitateur de longueur d'onde prédéterminée ;
- un échantillon à analyser;
- une entrée pour un faisceau de rayonnement électromagnétique d'analyse caractéristique dudit échantillon ; et
- des moyens optiques propres, à conduire le rayonnement électromagnétique excitateur sur l'échantillon, à recevoir le faisceau d'analyse résultant issu de l'échantillon ainsi excité, limité à une bande spectrale choisie.

Il existe de nombreux moyens de filtrage optique qui réalisent le filtrage d'une bande ou raie spectrale étroite.

La Demanderesse s'est posée le problème d'innover dans la façon d'utiliser de tels moyens de filtrage en vue d'en améliorer leurs propriétés de filtrage dans un dispositif de spectrométrie.

Ainsi, un premier but de l'invention est de réaliser des moyens de filtrage optique propres à assurer simultanément la réjection d'une bande spectrale étroite et l'injection en sens inverse d'une radiation de longueur d'onde centrée sur cette même bande spectrale.

Un second but de l'invention est de réaliser des moyens de filtrage présentant une pente d'atténuation très raide au voisinage de la longueur d'onde à filtrer.

Un troisième but de l'invention est de fournir des moyens de filtrage amovibles et réglables autour de n'importe quelle longueur d'onde à filtrer.

L'invention porte sur un dispositif de spectrométrie dispersive du type connu.

L'invention concerne donc un dispositif de spectrométrie Raman comprenant :
- des moyens générateurs (LS) propres à générer un rayonnement électromagnétique excitateur (ZX) de longueur d'onde prédéterminée (λ0) ;
- un échantillon (EC) à analyser sous une direction d'incidence ;
- une entrée (FE) pour un faisceau de rayonnement électromagnétique d'analyse (ON) caractéristique dudit échantillon ;
- des moyens optiques propres à conduire le rayonnement électromagnétique excitateur (EX) sur l'échantillon ; à recevoir le faisceau d'analyse (ON), issu de l'échantillon ainsi excité dans la direction opposée à la direction d'incidence ;
les moyens optiques comprenant des moyens de filtrage spectral propres à injecter dans un premier sens allant des moyens générateurs (LS) vers l'échantillon (EC) en arrêtant une première bande spectrale (FZ) et en laissant passer une seconde bande spectrale (BZ) de largeur spectrale étroite prédéterminée et centrée sur la longueur d'onde du rayonnement excitateur (λ0), les premières bandes (FZ) et (BZ) étant complémentaires ;
lesdits moyens de filtrage spectral étant propres, en outre, à filtrer dans un second sens inverse du premier sens, en outre, à filtrer dans un second sens inverse du premier sens, en laissant passer la première bande spectrale (FZ) et en arrêtant la seconde bande spectrale (BZ).

Selon l'invention, les moyens optiques comprennent :
- des moyens expanseurs de faisceau (LO), disposés en sortie des moyens générateurs (LS) ;
- des premiers moyens de transfert propres à transférer le rayonnement excitateur issu des moyens de filtrage spectral selon le premier sens sur des premiers moyens de filtrage spatial en forme de fente formant l'entrée (FE) ;
- des seconds moyens de transfert propres à transférer le rayonnement d'analyse issu des moyens de filtrage spectral selon le second sens sur des seconds moyens de filtrage spatial (FS) en forme de fente, les premiers et seconds moyens de filtrage spatial étant conjugués optiquement les uns par rapport aux autres,
- les moyens de filtrage spectral comprenant un piège à lumière (PG10) associé à au moins un réseau dispersif (R10), et en ce que les premiers moyens de transfert (M10, M20) étant propres à former une image spectrale dispersée par le réseau dispersif (R10) dans un plan focal et que le piège à lumière (PG10) est placé dans ledit plan focal, ce qui permet d'injecter dans les moyens optiques, le rayonnement électromagnétique excitateur (EX) selon un trajet optique confondu avec celui d'analyse (ON) en sens inverse et avec la même ouverture de faisceau.

Une telle structure présente un grand intérêt.

En effet, elle est très avantageuse par exemple lorsque la source de lumière employée émet non seulement une radiation utile, mais aussi d'autres radiations ayant des longueurs d'ondes différentes de celle de la radiation utile et que l'on considère comme indésirables. C'est le cas notamment des lasers à diodes émettant sur plusieurs modes, des lasers à colorants ou encore des lasers émettant à la fois des radiations stimulées intenses et des raies non stimulées dues au plasma ou aux sources de pompage.

Une telle structure a aussi l'avantage de supprimer des éléments optiques utilisés habituellement dans un dispositif de spectrométrie tels que les lames dichroïques séparatrices de faisceaux. Elle est de plus de mise en oeuvre facile.

En pratique, les moyens de filtrage filtrent par réflexion, par transmission, ou par réfraction.

D'autres avantages et caractéristiques de l'invention apparaîtront à la lumière de la description ci-après et des dessins annexés dans lesquels :
- la figure 1 représente la réponse spectrale d'un filtre idéal de type coupe-bande ;
- la figure 2 est une vue schématique d'un piège à lumière par transmission selon l'invention ;
- la figure 3 est une vue schématique d'un piège à lumière par réflexion selon l'invention ;
- la figure 4 est une vue selon la coupe WW' du piège à lumière de la figure 3 selon l'invention ;
- la figure 5 est une vue schématique d'une installation de spectrométrie dispersive dans laquelle un piège à lumière par transmission sert à la fois à l'injection de la raie excitatrice et à la réjection de celle-ci selon l'invention ;
- les figures 6A, 6B, 6C, et 6D représentent schématiquement une installation de spectrométrie;

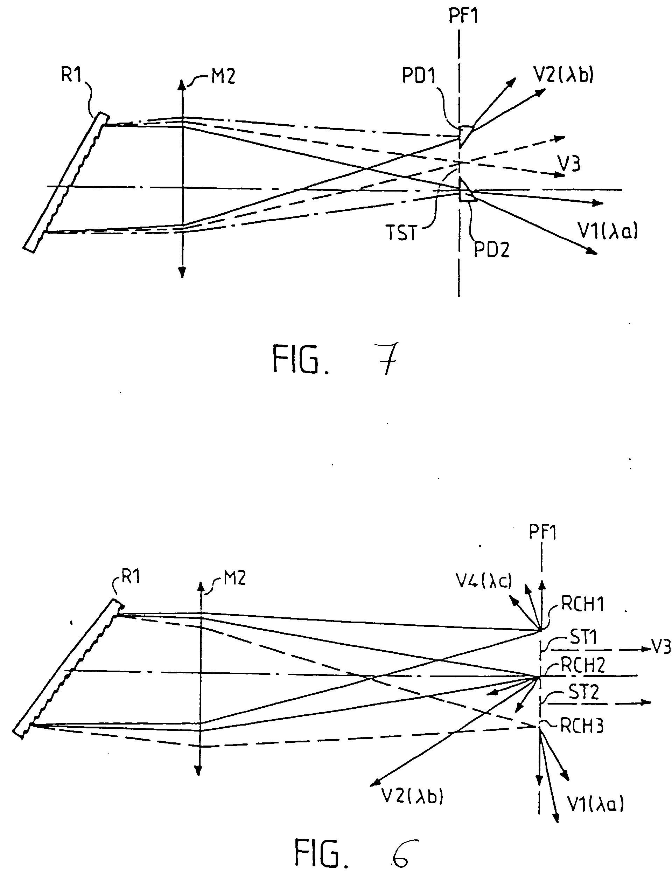

- la figure 6 est une vue en coupe d'un triple piège à lumière par réflexion selon l'invention ; et
- la figure 7 est une vue en coupe d'un double piège à lumière par réfraction selon l'invention.

Les dessins comportent pour l'essentiel des éléments de caractère certain. A ce titre ils font partie intégrante de la description et pourront non seulement servir à mieux faire comprendre la description détaillée mais aussi contribuer le cas échéant à la définition de l'invention.

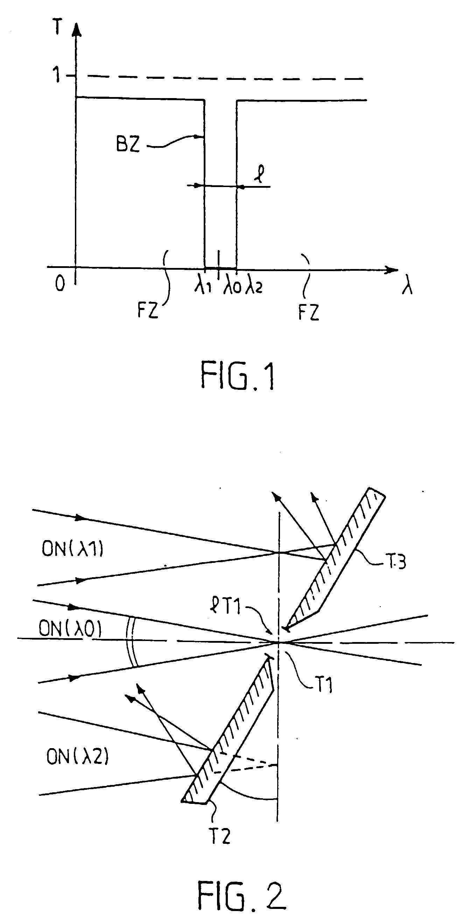

Sur la figure 1, on a représenté une courbe illustrant la réponse spectrale d'un filtre optique idéal de type coupe-bande ou à réjection de bande.

Sur l'axe des ordonnées, il est représenté la transmittance T du filtre et sur l'axe des abscisses, il est représenté la fréquence ou la longueur d'onde λ du rayonnement électromagnétique à filtrer.

La réponse spectrale d'un filtre coupe-bande ou réjecteur de bande idéal présente un profil rectangulaire. Il laisse passer avec une valeur de transmission maximale les radiations ayant une longueur d'onde inférieure à une longueur d'onde λ1 et supérieure à une longueur d'onde λ2 et élimine avec une valeur de transmission nulle les radiations ayant une longueur d'onde comprise entre λ1 et λ2, c'est-à-dire celles centrées autour de la fréquence centrale λ0.

En pratique, la bande spectrale BZ éliminée ou réjectée a une largeur 1 proportionnelle à la différence λ2-λ1. Le reste du spectre forme la bande passante FZ.

Selon l'invention, les moyens de filtrage filtrent par transmission.

Par exemple (figure 2), le piège à lumière par transmission est constitué d'un intervalle transparent T1 entre deux lèvres de largeur prédéterminée IT1 laissant passer une bande spectrale BZ de largeur spectrale prédéterminée et centrée sur une fréquence choisie correspondant à la longueur d'onde du rayonnement électromagnétique à piéger λ0.

L'espace ou intervalle T1 est intercalé entre des surfaces réfléchissantes T2 et T3 propres à réfléchir l'image spectrale dispersée FZ dépourvue de ladite bande spectrale ainsi piégée BZ en vue d'une analyse ultérieure.

En pratique, les seconde et troisième surfaces réfléchissantes T2 et T3 sont à bords biseautés rectilignes ou curvilignes, ce qui permet de définir une fente de largeur prédéterminée correspondant à la largeur IT1 de la première surface transparente T1.

L'écartement entre les surfaces T1 et T2 permet de faire varier la bande IT1.

Selon l'invention, les moyens de filtrage peuvent aussi filtrer par réflexion.

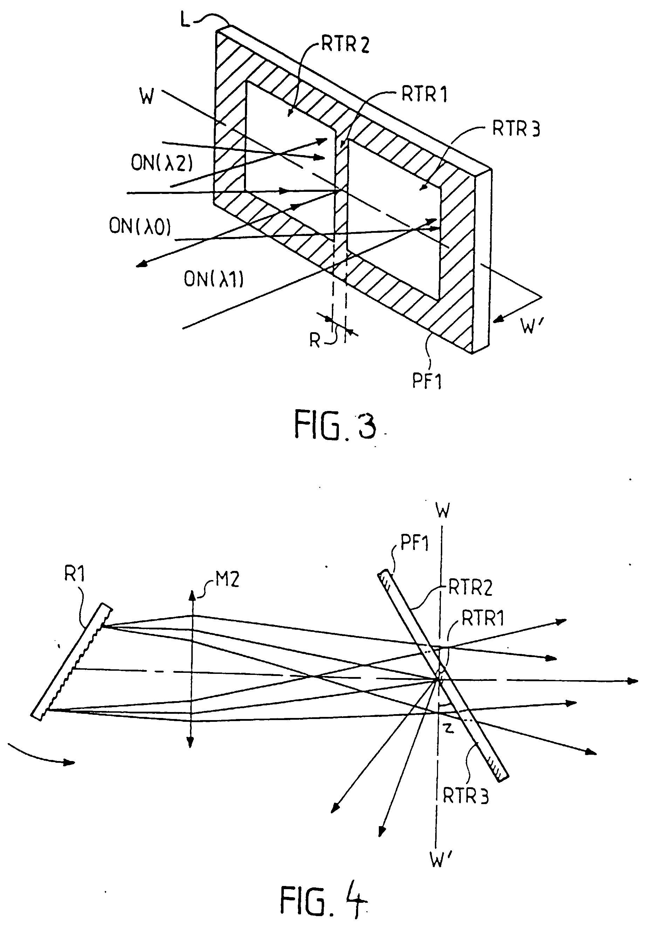

Dans ce cas (figure 3), le piège à lumière comprend une première surface réfléchissante RTR1 de largeur prédéterminée R réfléchissant la bande spectrale BZ de largeur spectrale prédéterminée et centrée sur ladite fréquence choisie correspondant à la longueur d'onde du rayonnement électromagnétique à piéger.

La première surface réfléchissante RTR1 est alors intercalée entre des seconde et troisième surfaces transparentes RTR2 et RTR3 pour laisser passer l'image spectrale dispersée FZ dépourvue de ladite bande spectrale BZ ainsi piégée.

Avantageusement, les surfaces transparentes RTR2 et RTR3 sont revêtues d'une couche antiréfléchissante multidiélectrique sur les deux faces.

Par exemple, les surfaces RTR1, RTR2 et RTR3 sont réalisées sur une lame L de matériau optique transparent sur laquelle sont délimitées lesdites surfaces.

Il a été remarqué que la lame L (figure 4) doit être inclinée d'un angle Z par rapport à l'axe optique afin que la réflexion de la bande spectrale BZ ne revienne pas vers l'étage dispersif précédent ici R1 pour éviter une diffusion parasite.

La Demanderesse a remarqué de façon surprenante que le piège à lumière par transmission ou par réflexion tel que décrit en référence aux figures 2 à 4 peut non seulement servir à la réjection d'une bande spectrale BZ de largeur 1 centrée sur λ0, mais aussi à l'injection en sens inverse de cette même bande spectrale BZ dans un dispositif de spectrométrie dispersive d'une part ou assurer les deux rôles simultanément d'autre part.

Le piège à lumière par réflexion ou transmission devient alors un filtre à au moins deux voies caractérisées par des réponses spectrales complémentaires.

Un tel filtre à au moins deux voies trouve une application préférentielle mais non limitative dans les installations de spectrométrie dispersive à effet Raman ou fluorescence.

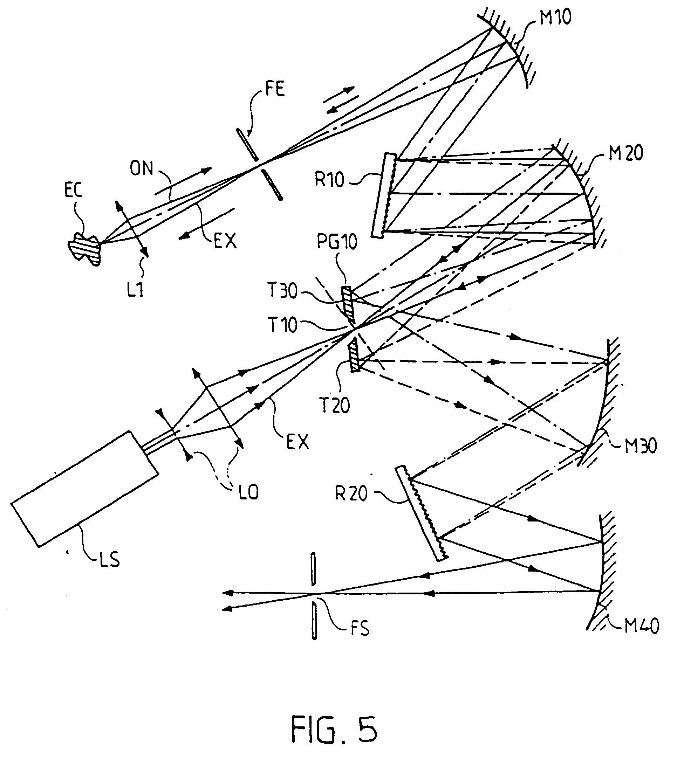

Sur la figure 5, on a représenté schématiquement un prémonochromateur du type soustractif équipé d'un piège à lumière par transmission selon l'invention réalisant l'injection dans le premier étage de la radiation excitatrice à λ0 et la réjection de cette radiation excitatrice dans le second étage dispersif.

Une source de lumière LS monochromatique engendre une radiation d'excitation EX de longueur d'onde λ0.

Avantageusement, un piège à lumière par transmission PG10 identique à celui décrit en référence à la figure 13 va transmettre vers un premier étage dispersif R10, cette radiation d'excitation EX à λ0.

Plus précisément, des moyens optiques LO focalisent la radiation excitatrice EX à λ0 sur la surface de transmission T10 du piège à lumière par transmission PG10. Les moyens optiques LO constituent ici un expanseur de faisceau qui adapte l'ouverture du faisceau EX pour assurer une résolution spatiale optimale au niveau de l'échantillon à analyser EC.

En pratique, le premier étage dispersif comprend l'échantillon à analyser EC, une lentille telle que par exemple un objectif de microscope L1, une fente d'entrée FE recevant le rayonnement électromagnétique à analyser ON, un miroir collimateur M10, un réseau dispersif R10 et un miroir M20 formant sur les moyens formant piège à lumière PG10 une image spectrale dispersée.

Dans le sens aller du trajet optique, la radiation excitatrice EX à λ0 traverse donc la surface de transmission T10 pour être injectée à travers le premier étage dispersif vers l'échantillon EC via les éléments optiques successifs M20, R10, M10, FE, L1.

La Demanderesse a remarqué de façon surprenante que ce dispositif constitue de plus un monochromateur qui effectue aussi un filtrage de la radiation excitatrice en éliminant les composantes situées en dehors de la bande passante spectrale BZ (cela trouve par exemple une application dans l'élimination des raies du plasma émises par un LASER à gaz, ou des modes latéraux d'un LASER à diode).

Dans le sens retour du trajet optique, la lumière polychromatique constituant le faisceau ON résultant de l'édairement de l'échantillon EC par la radiation d'excitation EX à λ0 est acheminée sur le piège à lumière PG10 pour être filtrée via les éléments optiques successifs L1, FE, M10, R10 et M20.

Plus précisément, la partie spectrale formant bande passante FZ de l'image spectrale dispersée est réfléchie vers le miroir M30 par les surfaces réfléchissantes T20 et T30 du piège à lumière PG10 tandis que la bande spectrale BZ centrée sur λ0 est rejetée vers la source LS par la surface de transmission T10.

La partie spectrale formant bande passante FZ ainsi dépourvue de la bande spectrale BZ est enfin acheminée vers un spectrographe d'analyse via un réseau R20, un miroir M40 et une fente de sortie FS.

Pour améliorer la réjection de la diffusion de la radiation excitatrice λ0 par les éléments optiques du premier étage dispersif, il est possible selon l'invention de placer en série une pluralité de pièges à lumière tels que décrits en référence à la figure 5.

En pratique, la réponse spectrale des différents pièges à lumière ainsi mis en série est centrée sur λ0.

En variante, il est possible selon l'invention de placer en série une pluralité de pièges à lumière de réponses spectrales différentes et non complémentaires, centrées respectivement sur λa, λb, λc, ...

Avec cette variante, il est ainsi possible de réaliser soit l'injection ou la réjection de plusieurs raies d'excitation de longueur d'onde différente, soit la mesure d'intensité de plusieurs raies choisies dans le spectre.

Une telle structure trouve une application dans le traitement thermique, le traitement photochimique, le recuit ou l'ablation par laser.

Dans une autre variante, il est possible selon l'invention de disposer plusieurs pièges à lumière par réflexion, transmission, réfraction permettant chacun de filtrer plusieurs bandes étroites centrées sur des longueurs d'onde différentes.

Des moyens de filtrage assurantselon l'invention l'injection d'une première bande spectrale dans un premier sens optique et la réjection de cette première bande spectrale dans un second sens optique, inverse du premier, peuvent être utilisés dans d'autres montages que celui décrit en référence à la figure 5.

Sur la figure 6 on a représenté un triple piège à lumière par réflexion.

On y retrouve le réseau R1 dispersif qui délivre une image spectrale dispersée transférée par le miroir M2 sur le plan focal PF1.

Le triple piège à lumière par réflexion comprend trois caches réfléchissants RCH1, RCH2 et RCH3 espacés les uns des autres par deux surfaces transparentes ST1, ST2.

Les caches RCH1, RCH2 et RCH3 constituent quatre voies de filtrage pour trois longueurs d'ondes différentes λa, λb et λc.

La première voie V1 de filtrage est réalisée par le cache réfléchissant RCH3 qui réfléchit les radiations à λa.

La seconde voie V2 de filtrage est réalisée par le cache réfléchissant RCH2 qui réfléchit les radiations à λb.

La troisième voie V3 de filtrage est réalisée par les surfaces transparentes ST1 et ST2 qui laissent passer les radiations différentes de λa, λb et λc.

La quatrième voie V4 de filtrage est réalisée par le cache réfléchissant RCH1 qui réfléchit les radiations λc.

Sur la figure 7, on a représenté un double piège à lumière par réfraction.

On y retrouve le réseau R1 dispersif qui délivre une image spectrale dispersée transférée par le miroir M2 sur le plan focal PF1.

Le double piège à lumière par réflexion comprend deux prismes déviateurs PD1 et PD2 espacés l'un de l'autre par une surface transparente TST.

Les prismes déviateurs PD1 et PD2 constituent trois voies de filtrage.

la première voie de filtrage V1 est réalisée par le prisme déviateur PD1 qui dévie les radiations à λa.

La seconde voie de filtrage V2 est réalisée par le prisme déviateur PD2 qui dévie les radiations à λb.

La troisième voie de filtrage V3 est réalisée par la surface transparente TST qui laisse passer les radiations différentes de λa et λb.

## Revendications

1. Dispositif de spectrométrie Raman comprenant:
- des moyens générateurs (LS) propres à générer un rayonnement électromagnétique excitateur (zx) de longueur d'onde prédéterminée (λ0);
- un échantillon (EC) à analyser sous une direction d'incidence;
- une entrée (FE) pour un faisceau de rayonnement électromagnétique d'analyse (ON) caractéristique dudit échantillon;
- des moyens optiques propres à conduire le rayonnement électromagnétique excitateur (EX) sur l'échantillon; à recevoir le faisceau d'analyse (ON), issu de l'échantillon ainsi excité dans la direction opposée à la direction d'incidence;
les moyens optiques comprenant des moyens de filtrage spectral propres à injecter dans un premier sens allant des moyens générateurs (LS) vers l'échantillon (EC) en arrêtant une première bande spectrale (FZ) et en laissant passer une seconde bande spectrale (BZ) de largeur spectrale étroite prédéterminée (1) et centrée sur la longueur d'onde du rayonnement excitateur (λ0), les premières bandes (FZ) et (BZ) étant complémentaires;
lesdits moyens de filtrage spectral étant propres, en outre, à filtrer dans un second sens inverse du premier sens, en outre, à filtrer dans un second sens inverse du premier sens, en laissant passer la première bande spectrale (FZ) et en arrêtant la seconde bande spectrale (BZ);
caractérisé en ce que les moyens optiques comprennent:
- des moyens expanseurs de faisceau (LO), disposés en sortie des moyens générateurs (LS);
- des premiers moyens de transfert propres à transférer le rayonnement excitateur issu des moyens de filtrage spectral selon le premier sens sur des premiers moyens de filtrage spatial en forme de fente formant l'entrée (FE);
- des seconds moyens de transfert propres à transférer le rayonnement d'analyse issu des moyens de filtrage spectral selon le second sens sur des seconds moyens de filtrage spatial (FS) en forme de fente, les premiers et seconds moyens de filtrage spatial étant conjugués optiquement les uns par rapport aux autres,
- les moyens de filtrage spectral comprenant un piège à lumière (PG10) associé à au moins un réseau dispersif (R10), et en ce que les premiers moyens de transfert (M10, M20) étant propres à former une image spectrale dispersée par le réseau dispersif (R10) dans un plan focal et que le piège à lumière (PG10) est placé dans ledit plan focal, ce qui permet d'injecter dans les moyens optiques le rayonnement électromagnétique excitateur (Ex) selon un trajet optique confondu avec celui d'analyse (ON) en sens inverse et avec la même ouverture de faisceau.

2. Dispositif selon la revendication 1, caractérisé en ce que les moyens de filtrage spectral sont amovibles.

3. Dispositif selon l'une des revendications 1 et 2, caractérisé en ce que les moyens de filtrage spectral sont mobiles dans un repère à trois dimensions.

4. Dispositif selon l'une quelconque des revendications 1 à 3, caractérisé en ce que les moyens de filtrage spectral filtrent par transmission/réflexion respectivement en réjection/injection.

5. Dispositif selon l'une quelconque des revendications 1 à 4, caractérisé en ce que le piège à lumière (PG10) des moyens de filtrage spectral comprennent une première surface transparente (T10) de largeur prédéterminée laissant passer, selon lesdits premier et second sens optiques, la seconde bande spectrale (BZ) de largeur spectrale prédéterminée (1) et centrée sur une fréquence choisie correspondant à la longueur d'onde excitatrice (λ0), ladite première surface (T10) étant intercalée entre des seconde et troisième surfaces réfléchissantes (T20, T30) réfléchissant la première bande spectrale (FZ) complémentaire de la seconde bande spectrale (BZ) selon lesdits premier et second sens optiques.

6. Dispositif selon la revendication 5, caractérisé en ce que les seconde et troisième surfaces réfléchissantes (T20, T30) sont à bords biseautés rectilignes ou curvilignes, ce qui permet de définir une fente de largeur prédéterminée constituant la largeur de la première surface transparente.

7. Dispositif selon l'une quelconque des revendications 1 à 6, caractérisé en ce que les moyens de filtrage spectral par réflexion/transmission comprennent une première surface réfléchissante (RTR1) de largeur prédéterminée réfléchissant selon lesdits premier et second sens la seconde bande spectrale (BZ) de largeur spectrale prédéterminée et centrée sur ladite fréquence choisie correspondant à la longueur d'onde du rayonnement électromagnétique excitateur (λ0), ladite première surface réfléchissante (RTR1) étant intercalée entre des seconde et troisième surfaces transparentes (RTR2, RTR3) pour laisser passer la première bande spectrale (FZ) complémentaire de la seconde bande spectrale (BZ) selon les premier et second sens optiques.

8. Dispositif selon l'une quelconque des précédentes revendications, caractérisé en ce que les moyens optiques comprennent une pluralité de moyens de filtrage spectral en série, dont les réponses spectrales sont centrées sur une longueur d'onde choisie (λ0).

9. Dispositif selon l'une quelconque des revendications 1 à 9, caractérisé en ce que les moyens optiques comprennent une pluralité de moyens de filtrage spectral en série, dont les réponses spectrales sont centrées respectivement sur des longueurs d'onde différentes (λa, λb, λc).

## Claims

1. Raman spectrometry device comprising :
- generating means (LS) suitable for generating exciting electromagnetic radiation (EX) of a predetermined wavelength (λ0) ;
- a sample (EC) for analysis in an incident direction ;
- an inlet aperture (FE) for an electromagnetic radiation beam for analysis (ON) of the characteristics of said sample ;
- optic means suitable for directing the exciting electromagnetic radiation (EX) on the sample; for receiving the analysing beam (ON), from the sample (EC) excited in this manner in the opposite direction with respect to the incident direction ;
the optic means comprising spectral filtering means suitable for injection in a first direction from the generator means (LS) towards the sample (EC), by stopping a first spectral band (FZ) and by permitting a second spectral band (BZ) which is of a predetermined spectral width (1) and centred on the wavelength of the exciting radiation (λ0) to pass, the first (FZ) and the second (BZ) spectral bands being complementary ;
said spectral filtering means being furthermore suitable for filtering in a second direction, which is opposite to the first direction, by permitting a first spectral band (FZ) to pass and stopping the second spectral band (BZ) ;
characterized in that the optic means comprise :
- beam expanding means (LO) situated at the outlet of the generating means (LS) ;
- first transfer means suitable for transferring the exciting radiation, coming from the spectral filtering means, in the first direction to first spatial filtering means having the shape of a slot and forming the inlet (FE);
- second transfer means suitable for transferring the analysing radiation, coming from the spectral filtering means, in the second direction to second spatial filtering means (FS) having the shape of a slot, the first and second spatial filtering means being optically complementary to one another;
- the spectral filtering means comprising a light trap (PG10) which is associated with at least one dispersion stage (R10), and in that the first transfer means (M10, M20) are suitable for forming the spectral image dispersed by the dispersion stage (R10) in a focal plane and in that the light trap (PG10) is located at the level of said focal plane, which permits the electromagnetic exciting radiation (EX) to be directed into the optical means along an optical path which is merged with that of the analysis (ON) in the reverse direction and with the same opening of the beam.

2. Device according to claim 1, characterized in that the spectral filtering means are detachable.

3. Device according to any one of claims 1 and 2, characterized in that the spectral filtering means are movable in a three-dimensions.

4. Device according to any one of claims 1 to 3, characterized in that the spectral filtering means filter by transmission/reflection or by rejection/injection.

5. Device according to any one of claims 1 to 4, characterized in that the light trap (PG10) of the means of filtering comprise a first transparent surface (T10) of a predetermined size which permits the second spectral band (BZ) which is of a predetermined spectral width (1) and centred on a selected frequency corresponding to the wavelength (λ0), to pass in said first and second optical directions, said first surface (T10) being intercalated between second and third reflecting surfaces (T20, T30) reflecting the first spectral band (FZ) which is complementary to the second spectral band (BZ) in said first and second optical directions.

6. Device according to claim 5, characterized in that the second and third reflecting surfaces (T20, T30) have rectilinear or curved chamfered edges, which permits a slot of predetermined width, corresponding to the width of the first transparent surface, to be defined.

7. Device according to any one of claims 1 to 6, characterized in that the means for spectral filtering by reflection/transmission comprise a first reflecting surface (RTR1) of a predetermined width, reflecting the second spectral band (BZ) which is of a predetermined spectral width and centred on said selected frequency corresponding to the wavelength of the electromagnetic exciter radiation (λ0), in said first and second directions, said first reflecting surface (RTR1) being intercalated between the second and third transparent surfaces (RTR2 and RTR3) to permit the first spectral band (FZ), which is complementary to the second spectral band (BZ), to pass in the first and second optical directions.

8. Device according to any one of the preceding claims, characterized in that the optic means comprise, in series, a plurality of spectral filtering means, the spectral responses of which are centred on a selected wavelength (λ0).

9. Device according to any one of claims 1 to 8, characterized in that the optic means comprise a plurality of spectral filtering means in series, the spectral responses of which are centred, respectively on the various wavelengths (λa, λb, λc).

## Patentansprüche

1. Vorrichtung zur Raman-Spektralphotometrie, umfassend :
- Einrichtungen (LS) zum Erzeugen einer elektromagnetischen Erregerspannung (EX) mit einer festgelegten Wellenlänge (λ0) ;
- eine in einer Einfallsrichtung zu analysierende Probe (EC) ;
- einen Eingang (FE) für ein für die genannte Probe kennzeichnendes elektromagnetisches Analyse-Strahlenbündel (ON) ;
- geeignete optische Einrichtungen, um die elektromagnetische Erregerstrahlung (EX) auf die Probe zu leiten; um das von der so erregten Probe kommende Analysebündel (ON) in der der Einfallsrichtung entgegengesetzten Richtung zu empfangen ;
wobei die optischen Einrichtungen spektrale Filterungseinrichtungen umfassen, die geeignet sind, in einer ersten, von den Erzeugungseinrichtungen (LS) zu der Probe (EC) verlaufenden Richtung einzustrahlen und dabei ein erstes Spektralband (FZ) anzuhalten und ein zweites Spektralband (BZ) von festgelegter schmaler Spektralbreite (1) und auf eine entsprechend der Wellenlänge der Erregerstrahlung (λ0) gewählte Frequenz zentriert durchzulassen, wobei das erste Spektralband (FZ) und das zweite Spektralband (BZ) komplementär sind ;
wobei die genannten spektralen Filterungseinrichtungen außerdem die elektromagnetische Analysestrahlung (ON) in einer zweiten, der ersten Richtung entgegengesetzten Richtung filtern und dabei das erste Spektralband (FZ) durchlassen und das zweite Spektralband (BZ) anhalten ;
dadurch gekennzeichnet, daß die optischen Einrichtungen umfassen :
- am Ausgang der Erzeugungseinrichtungen (LS) angeordnete Strahlverbreiterungsmittel (LO) ;
- erste geignete Transfereinrichtungen zum Übertragen der von den spektralen Filtereinrichtungen kommenden Erregerstrahlung in der ersten Richtung auf erste spalfförmige, den Eingang (FE) bildende Raumfiltermittel ;
- zweite geeignete Transfereinrichtungen zum Übertragen der von den spektralen Filtereinrichtungen kommenden Analysestrahlung in der zweiten Richtung auf zweite spalfförmige Raumfiltermittel (FS), wobei die ersten und zweiten Raumfiltermittel optisch zueinander komplementär sind ;
- wobei die spektralen Filtereinrichtungen eine wenigstens einer Zerstreuungsstufe (R10) zugeordnete Lichtfalle (PG10) aufweisen, und daß die ersten Transfereinrichtungen (M10, M20) geeignet sind, das durch die Zerstreuungsstufe (R10) zertreute Spektralbild in einer durch die genannte gewählte Frequenz (λ0) festgelegten Brennebene zu bilden ; und die Lichtfalle (PG10) in Höhe der genannten Brennebene angeordnet ist, was ermöglicht, die elektromagnetische Erregerstrahlung (EX) entsprechend einer optischen Bahn, die mit der Analyse (ON) zusammenfällt, in umgekehrter Richtung und mit demselben Strahlenbündel-Öffnungswinkel in die optischen Einrichtungen einzuspeisen.

2. Vorrichtung nach Anspruch 1, dadurch gekennzeichnet, daß die spektralen Filterungseinrichtungen herausnehmbar sind.

3. Vorrichtung nach einem der Ansprüche 1 und 2, dadurch gekennzeichnet, daß die spektralen Filterungseinrichtungen in einem dreidimensionalen Bezugssystem beweglich sind.

4. Vorrichtung nach einem der Ansprüche 1 bis 3, dadurch gekennzeichnet, daß die spektralen Filterungseinrichtungen durch Transmission/Reflexion bzw. durch Ausstrahlung/Einstrahlung filtern.

5. Vorrichtung nach einem der Ansprüche 1 bis 4, dadurch gekennzeichnet, daß die Lichtfalle (PG10) der spektralen Filterungseinrichtungen eine erste transparente Fläche (T10) von festgelegter Breite umfaßt, die in den genannten ersten und zweiten optischen Richtungen das zweite Spektralband (BZ) von festgelegter Spektralbreite (1) und auf eine entsprechend der Erregerwellenlänge gewählte Frequenz (λ0) zentriert durchläßt, wobei die erste Fläche (T10) zwischen eine zweite und eine dritte reflektierende Fläche (T20), T30), die das erste, zum zweiten Spektralband (BZ) komplementäre Spektralband (FZ) entsprechend den genannten ersten und zweiten optischen Richtungen reflektiert, eingefügt ist.

6. Vorrichtung nach Anspruch 5, dadurch gekennzeichnet, daß die zweite und die dritte reflektierende Fläche (T20, T30) geradlinig oder gekrümmt angeschrägte Ränder aufweisen, was ermöglicht, einen Schlitz von festgelegter Breite zu definieren, entspreche der Breite der ersten transparenten Fläche.

7. Vorrichtung nach einem der Ansprüche 1 bis 6, dadurch gekennzeichnet, daß die spektralen Reflexions-/Transmissions-Filterungseinrichtungen eine erste reflektierende Fläche (RTR1) von festgelegter Breite aufweisen, die den genannten ersten und zweiten Richtungen entsprechend das zweite Spektralband (BZ) von festgelegter Spektralbreite und auf besagte gewählte Frequenz entsprechend der Wellenlänge der elektromagnetischen Erregerstrahlung (λ0) zentriert reflektieren, wobei besagte reflektierende erste Fläche (RTR1) zwischen eine zweite und eine dritte transparente Fläche (RTR2 und RTR3) eingefügt ist, um das erste, zum zweiten Spektralband (BZ) komplementäre Spektralband (FZ) entsprechend den ersten und zweiten optischen Richtungen durchzulassen.

8. Vorrichtung nach einem der vorhergehenden Ansprüche, dadurch gekennzeichnet, daß die optischen Einrichtungen eine Vielzahl spektraler Filterungseinrichtungen in Serie umfassen, deren Spektralempfindlichkeiten auf eine gewählte Wellenlänge (λ0) zentriert sind.

9. Vorrichtung nach einem der Ansprüche 1 bis 8, dadurch gekennzeichnet, daß die optischen Einrichtungen eine Vielzahl spektraler Filterungseinrichtungen in Serie umfassen, deren Spektralempfindlichkeiten jeweils auf unterschiedliche Wellenlänge (λa, λb, λc) zentriert sind.
